Europäisches Patentamt

European Patent Office

Office européen des brevets

(19)

(11) EP 1 408 259 B1

(12) EUROPEAN PATENT SPECIFICATION

(45) Date of publication and mention
of the grant of the patent:
**30.08.2006 Bulletin 2006/35**

(51) Int Cl.:
**F16H 61/12** (2006.01)　　**G01D 3/08** (2006.01)

(21) Application number: **02445125.4**

(22) Date of filing: **07.10.2002**

(54) **A method of detecting wear in a motor vehicle transmission and a transmission provided with means to detect such wear**

Verschleisserkennungsverfahren in einem Fahrzeuggetriebe und Getriebesteuerung zum Ermitteln dessen Verschleisses

Procédé et dispositif de détection de l'usure d'une boîte de vitesses de véhicule

(84) Designated Contracting States:
**DE GB SE**

(43) Date of publication of application:
**14.04.2004 Bulletin 2004/16**

(73) Proprietor: **Ford Global Technologies, LLC**
**Dearborn, MI 48126 (US)**

(72) Inventors:
 • **Freudenthaler, Pär**
  **44292 Romelanda (SE)**
 • **Mattson, Per**
  **43063 Hindas (SE)**

 • **Höök, Fredrik**
  **43492 Vallda (SE)**

(74) Representative: **Hellbom, Lars Olof et al**
 **Albihns Stockholm AB,**
 **Box 5581**
 **114 85 Stockholm (SE)**

(56) References cited:
 **EP-A- 0 436 974**　　**EP-A- 1 093 040**
 **EP-A- 1 219 867**　　**EP-A- 1 225 371**
 **US-B1- 6 175 793**　　**US-B1- 6 225 892**

EP 1 408 259 B1

**Description**

The present invention relates to a method of detecting wear of at least one preselected torque transmitting component in a motor vehicle transmission comprising an electronic control unit wherein signals at least representing selected gear ratio, transmission input shaft torque and input shaft rotational speed are available in the control unit.

The invention also relates to a motor vehicle transmission including an electronic control unit, signals at least representing selected gear ratio, transmission input shaft torque and input shaft rotational speed being available in the electronic control unit.

Motor vehicle transmissions are normally dimensioned for that specific type of vehicle in which they are to be used and to transmit torque from the engine which the transmission is connected to over a calculated life length of the vehicle based on normal driver behaviour and driving conditions. However, "normal" driver behaviour and driving conditions usually vary depending on the type of car. For example a regular passenger car will hardly be driven as a high performance sports car and vice versa and neither one will ever be driven off-road in rough terrain. Off-road driving requires motor vehicles specially designed for such conditions and they have heavy duty drive lines dimensioned to last over the calculated life lengh of the vehicle even when a substantial share of driving is off-road.

In recent years a new type of passenger car has become very popular, namely a so called sports utility vehicle (SUV). Some of these are designed and have heavy duty drive lines specially dimensioned for driving off-road in rough terrain while others are designed to be driven primarily on the road and only occasionally in terrain which, however, must not be rough. Not only when a vehicle is driven off-road but also, for example, when it is driven as a tow vehicle or when a substantial share of driving is in heavy traffic with many starts and stop it is subject to severe loads.

By experience it is well known that a large majority of all SUV customers do not buy such a vehicle because of its capability of withstanding off-road driving conditions but rather because they are four-wheel driven and considered to be safer than a regular passenger car in a collision. Also they are demanded because usually they can carry heavier load than a comparable station wagon which is usually lighter. As a consequence many of those SUVs running today, which will never or at least very seldom be driven off-road, will be more or less overdimensioned particularly with regard to the transmission. If the transmission has to be dimensioned for worst case off-road driving conditions it will be overdimensioned in a SUV which will never be driven off-road. Since the transmission is an expensive component of the drive line of a vehicle cost can be saved if it need not be overdimensioned.

A general purpose of the present invention is to achieve a method to detect wear in a motor vehicle transmission of the type described by way of introduction so as to enable the use of almost the same transmission specifications for a wide range of engines and types of vehicles.

A further purpose of the present invention is to achieve a method to detect wear which can be used to eliminate the need to overdimension transmissions for that type of SUVs which can be expected never or only occasionally to be driven off-road.

This is achieved according to the invention by means of a method comprising the steps of accumulating a measured duty cycle representative of revolutions and related torque transmitted by said component when running and calculating wear of said component by comparing the accumulated measured duty cycle with a total duty cycle which represents a predetermined level of wear of said component.

Preferably the predetermined total duty cycle is based on a Wöhler diagram obtained from tests of said preselected torque transmitting component. Especially a component is selected which is expected to be one that most likely will break down first . Such a component could be a gear wheel of a gear set transmitting torque with the highest gear ratio to the driving wheels of the vehicle. However, there may be cases where it might be advantageous to preselect more than one torque transmitting component and to accumulate the measured duty cycle thereof. An individual total duty cycle for each such component is predermined. The accumulated measured duty cycle of each component is then compared with the individual predetermined total duty cycle related to the component in question.

The level of wear of the preselected torque transmitting component is preferably defined as the accumulated measured duty cycle divided by said predetermined total duty cycle. A signal representing this duty cycle relation can be used either as an input signal to external test equipment and the wear can then be detected with regular intervals in connection with regular services of the vehicle or as an input signal to a computer in the car having a dashboard display, thereby enabling on-board detection.

Another purpose of the present invention is to achieve a motor vehicle transmission of the type described by way of introduction provided with means to detect outstanding user situations which may decrease the life length of the transmission.

This is achieved according to the invention by virtue of the fact that the electronic control unit is arranged to calculate wear of a preselected torque transmitting component of the transmission by accumulating a measured duty cycle representative of revolutions and related torque transmitted by said component when running and by comparing the accumulated measured duty cycle with a predetermined total duty cycle which represents a predetermined level of wear of said component.

In a transmission having a planetary gearing preferably the sun gear of a planetary gear set transmitting torque with the highest gear ratio is said preselected torque transmitting component.

The invention will be described in more detail below with reference to examples shown in the accompanying drawing, where

Fig. 1 shows a schematic presentation of an engine and gearbox installation for a motor vehicle,
Fig. 2 shows a schematic longitudinal section of an automatic gearbox and
Fig. 3 shows a Wöhler diagram.

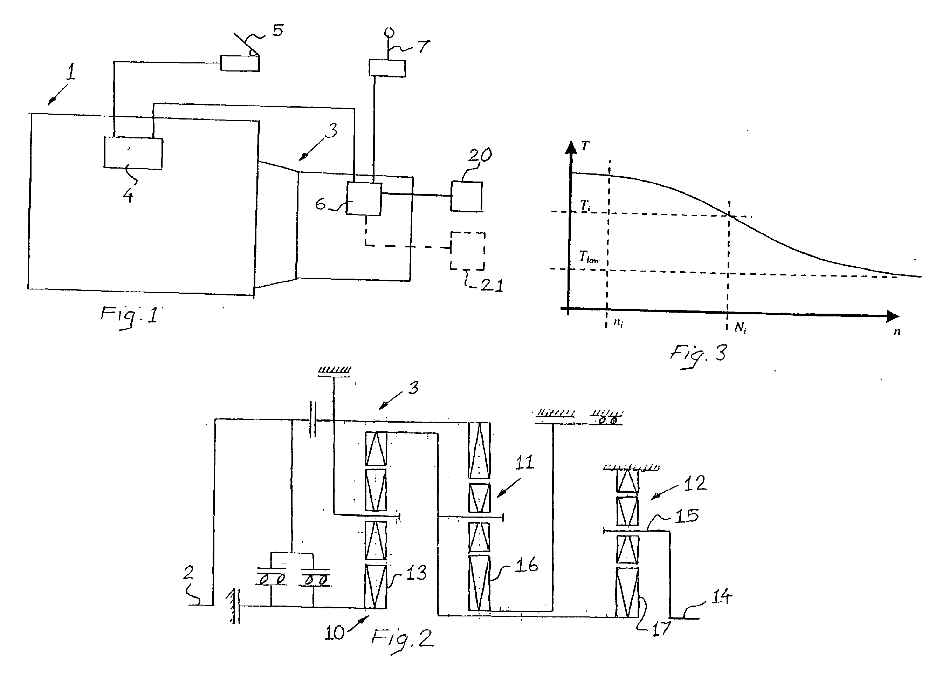

In Fig. 1 an internal combustion engine 1 for a motor vehicle is shown, the crankshaft (not shown) of which via a torque converter (not shown) is drivingly connected to an input shaft 2 (Fig. 2) of an automatic transmission 3. The engine 1 is controlled by an electronic engine control unit 4 in response to signals representing various control parameters, one being requested torque, e. g. the position of an accelerator pedal 5. The engine control unit 4 communicates with an electronic transmission control unit 6, which is connected to a manual gear selector 7 by means of which the driver can select either automatic or manual shifting of the transmission 3. When automatic shifting is selected the control unit 6 controls shifting in response at least to vehicle speed, transmission input shaft torque and input shaft rotational speed. The engine control function and the transmission control function can of course be integrated in a single control unit.

The transmission is a well known automatic transmission which has been on the market for several years. Therefore, it will only be described briefly here. It comprises three planetary gear sets, namely an input gear set 10, a reaction gear set 11 and a final drive gear set 12. In first gear, i. e. the gear having the highest gear ratio, torque is transmitted from the input shaft 2 via the sun gear 13 of the input gear set 10 to the output shaft 14 which is connected to the planet carrier 15 of the final drive gear set 12.

In order to detect an outstanding user situation which may decrease the life length of the transmission at least one critical torque transmitting component is preselected, e. g. that component of the transmission which is most likely to become seriously damaged first. This component could be the sun gear 13 of the input gear set 10. By means of tests a Wöhler diagram for the selected component is established. An example of such a diagram is shown in Fig. 3 wherein T is torque and n is number of revolutions. The Wöhler diagram is mapped in the transmission control unit 6 to a 2D-lookup table with for example twenty samples. The table is indexed with real transmission input torque and read out number of rotations. A total duty cycle figure, $DC_{tot}$ is set. DC is defined according to:

$$\sum \left( T_i^w \cdot n_i \right)$$

wherein w is the Wöhler exponent.

At torque levels above a calibrated lowest torque $T_{low}$, provided a gear is selected either manually or automatically so that torque is transmitted via the preselected component, e. g. the sun gear 13, transmission input torque $T_i$ and input speed are sampled at regular intervals, e. g. each 25 ms. Input speed is then recalculated into number of rotations $n_1$ by multiplying with sample time. As an alternative to sampling at regular intervals the number of revolutions $n_1$ at torque levels above $T_{low}$ can be counted and accumulated continuously. The accumulated measured duty cycle is memorized in the control unit each time the car ignition is turned off.

The Wöhler number of revolutions $N_i$ is read out from the lookup table indexed by input torque. The control unit 6 calculates accumulated damage according

to: $\dfrac{DC}{DC_{tot}} = \sum \dfrac{n_i}{N_i}$ , $DC_{tot}$ being a predetermined level of damage. $N_i$ and $n_i$ can be normalised to reach a better calculation accuracy when adding small numbers $n_i / N_i$ together.

When the relation $DC / DC_{tot}$ exceeds 1 (or unity) the control unit 6 produces an output warning signal. This signal can be used as an input signal to an indicator 20 on the dashboard of the vehicle, as indicated in Fig. 1, so as to direcly alert the driver that the transmission needs service. As an alternative no indication of the condition of the transmission is provided in the vehicle. Instead the condition of the transmission is checked, e. g. in connection with regular services of the vehicle, by plugging in a test instrument 21 into the control unit 6.

Within the scope of the invention the load situation of all torque transmitting gear sets of a transmission, i. e. in this case also the reaction planetary gear set 11 and the final drive gear set 12, can be monitored and the estimated wear accumulated, in which case Wöhler diagrams for the sun gear 16 of the gear set 11 and the sun gear 17 of the gear set 12 are established and mapped in table form in the control unit 6 as described above. The accumulated damage of each sun gear is calculated as described above. It is for practical reasons that the measured duty cycles for the sun gears are selected. These are then correlated to the statistic lenght of life of the respective planetary gear set.

The invention has been described above with reference to an automatic transmission but it can of course also be implemented in a vehicle having a manual gearbox and an engine control unit.

## Claims

1.  A method of detecting wear of at least one preselected torque transmitting component in a vehicle transmission comprising an electronic control unit wherein signals representing at least selected gear ratio, transmission input shaft torque and input shaft rotational speed are available in the control unit, **characterized by**

    - accumulating a measured duty cycle representative of revolutions and related torque transmitted by said component when running,
    - calculating wear of said component by comparing the accumulated measured duty cycle with a predetermined total duty cycle which represents a predetermined level of wear of said component.

2.  A method according to claim 1, **characterized by** basing the predetermined total duty cycle on a Whöler diagram obtained from tests of said preselected torque transmitting component.

3.  A method according to claim 1 or 2, **characterized by** accumulating a measured duty cycle only when the preselected torque transmitting component is engaged in transmitting torque.

4.  A method according to claim 1 or 2, **characterized by** only accumulating a measured duty cycle at torque levels above a predetermined torque level.

5.  A method according to one of claims 1-4, **characterized by** producing an output signal representing the accumulated duty cycle divided by said predetermined total duty cycle.

6.  A method according to claim 5, **characterized by** using said output signal as an input signal to indicator means readable inside a vehicle to indicate wear of a transmission mounted in the vehicle.

7.  A method according to claim 5, **characterized by** using said output signal as an input signal to indicator means readable outside a vehicle.

8.  A method according to one of claims 1-7 to detect wear of at least one preselected torque transmitting component in an automatic vehicle transmission having a planetary gearing, **characterized in that** the sun gear (13) of a planetary gear set is said preselected torque transmitting component

9.  A method according to claim 8, **characterized in that** the sun gear of a planetary gear set transmitting torque with the highest gear ratio is said preselected torque transmitting component.

10. A method according to one of claims 1-9, **characterized in that** wear of more than one torque transmitting component is detected.

11. A motor vehicle transmission (3) including an electronic control unit (6), signals at least representing selected gear ratio, transmission input shaft torque and input shaft rotational speed being available in the electronic control unit, **characterized in that** the electronic control unit (6) is arranged to calculate wear of a preselected torque transmitting component of the transmission by accumulating a measured duty cycle (DC) representative of revolutions and related torque transmitted by said component when running and by comparing the accumulated measured duty cycle with a predetermined total duty cycle ($DC_{tot}$) which represents a predetermined level of wear of said component.

12. A transmission according to claim 11, **characterized in that** in the electronic control unit (6) is stored in table form a Whöler diagram obtained from tests of said torque transmitting component, said predetermined total duty cycle being based on said diagram.

13. A transmission according to claim 11 or 12, **characterized in that** the electronic control unit (6) is arranged to accumulate a measured duty cycle (DC) only when the preselected torque transmitting component is engaged in transmitting torque.

**14.** A transmission according to claim 11-12, **characterized in that** the electronic control unit (6) is arranged to only accumulate a measured duty cycle (DC) at torque levels above a predetermined torque level ($T_{low}$).

**15.** A transmission according to one of claims 11-14, **characterized in that** the electronic control unit (6) is arranged to detect wear of more than one torque transmitting component.

**16.** A transmission according to one of claims 11-15 and having a planetary gearing (10,11,12), **characterized in that** the sun gear (13,16,17) of at least one planetary gear set of said planetary gearing is said preselected torque transmitting component.

**17.** A transmission according to claim 16, **characterized in that** the sun gear (13) of a planetary gear set (10) transmitting torque with the highest gear ratio is said preselected torque transmitting component

**Patentansprüche**

**1.** Verfahren zum Erfassen des Verschleißes mindestens eines vorausgewählten Drehmomentübartragungsbauteils in einem Fahrzeuggetriebe mit einer elektronischen Steuereinheit, wobei Signale in der Steuereinheit verfügbar sind, die zumindest das ausgewählte Gangverhältnis, das Getriebeantriebswellendrehmoment und die Antriebswellendrehzahl repräsentieren, **gekennzeichnet durch**

- Akkumulieren eines gemessenen Betriebszyklus, der für die Umdrehungen und das zugehörige, **durch** das Bauteil beim Laufen übertragene Drehmoment repräsentativ ist,
- Berechnen des Verschleißes des Bauteils **durch** Vergleichen des akkumulierten, gemessenen Betriebszyklus mit einem vorbestimmten Gesamtbetriebszyklus, der ein vorbestimmtes Niveau des Verschleißes des Bauteils repräsentiert.

**2.** Verfahren nach Anspruch 1, **gekennzeichnet durch** Basieren des vorbestimmten Gesamtbetriebszyklus auf ein Wöhler Diagramm, das aus Tests an dem vorausgewählten Drehmomentübertragungsbauteil erhalten ist.

**3.** Verfahren nach Anspruch 1 oder 2, **gekennzeichnet durch** Akkumulieren eines gemessenen Betriebszyklus nur, wenn das vorausgewählte Drehmomentübertragungsbauteil dabei ist, Drehmoment zu übertragen.

**4.** Verfahren nach Anspruch 1 oder 2, **gekennzeichnet durch** Akkumulieren eines gemessenen Betriebszyklus nur bei Drehmomentniveaus oberhalb eines vorbestimmten Drehmomentniveaus.

**5.** Verfahren nach einem der Ansprüche 1-4, **gekennzeichnet durch** Erzeugen eines Ausgabesignals, das den akkumulierten Betriebszyklus geteilt **durch** den vorbestimmten Gesamtbetriebszyklus repräsentiert.

**6.** Verfahren nach Anspruch 5, **gekennzeichnet durch** Verwenden des Ausgabesignals als Eingabesignal zu einer Anzeigeeinrichtung, die in einem Fahrzeug ablesbar ist, um einen Verschleiß eines in dem Fahrzeug eingebauten Getriebes anzuzeigen.

**7.** Verfahren nach Anspruch 5, **gekennzeichnet durch** Verwenden des Ausgabesignals als Eingabesignal zu einer außerhalb eines Fahrzeugs lesbaren Anzeigeeinrichtung.

**8.** Verfahren nach einem der Ansprüche 1-7, zum Erfassen des Verschleißes zumindest eines vorausgewählten Drehmomentübertragungsbauteils in einem Automatikfahrzeuggetriebe mit einem Planetengetriebe, **dadurch gekennzeichnet, dass** das Sonnenrad (13) eines Planetenradsatzes das vorausgewählte Drehmomentübertragungsbauteil ist.

**9.** Verfahren nach Anspruch 8, **dadurch gekennzeichnet, dass** das Sonnenrad eines drehmomentübertragenden Planetenradsatzes mit dem höchsten Gangverhältnis das vorausgewählte Drehmomentübertragungsbauteil ist.

**10.** Verfahren nach einem der Ansprüche 1-9, **dadurch gekennzeichnet, dass** der Verschleiß von mehr als einem Drehmomentübertragungsbauteil erfasst wird.

**11.** Motorfahrzeuggetriebe (3) mit einer elektronischen Steuereinhit (6), wobei Signale in der elektronischen Steuereinheit verfügbar sind, die zumindest das ausgewählte Gangverhältnis, das Getriebeantriebswellendrehmoment und die Antriebswellendrehzahl repräsentieren, **dadurch gekennzeichnet, dass** die elektronische Steuereinheit (6) angeordnet ist, um den Verschleiß eines vorausgewählten Drehmomentübertragungsbauteils des Getriebes durch Akkumulieren eines gemessenen Betriebszyklus (DC) , der für Umdrehungen und das zugehörige, durch das Bauteil beim Laufen übertragene Drehmoment repräsentativ ist, und durch Vergleichen des akkumulierten, gemessenen Betriebszyklus mit einem vorbestimmten Gesamtbetriebszyklus ($DC_{tot}$), der ein vorbestimmtes Niveau von Verschleiß des Bauteils repräsentiert, zu berechnen.

**12.** Getriebe nach Anspruch 11, **dadurch gekennzeichnet, dass** die elektronische Steuereinheit (6) in Tabellenform eines Wöhler Diagramms gespeichert ist, das aus Tests des Drehmomentübertragungsbauteils erhalten ist, wobei der vorbestimmte Gesamtbetriebszyklus auf dem Diagramm basiert.

**13.** Getriebe nach Anspruch 11 oder 12, **dadurch gekennzeichnet, dass** die elektronische Steuereinheit (6) angeordnet ist, um einen gemessenen Betriebszyklus (DC) nur zu akkumulieren, wenn das vorausgewählte Drehmomentübertragungsbauteil dabei ist, Drehmoment zu übertragen.

**14.** Getriebe nach Anspruch 11-12, **dadurch gekennzeichnet, dass** die elektronische Steuereinheit (6) angeordnet ist, einen gemessenen Betriebszyklus (DC) nur bei Drehmomentniveaus oberhalb eines bestimmten Drehmomentniveaus ($T_{low}$) zu akkumulieren.

**15.** Getriebe nach einem der Ansprüche 11-14, **dadurch gekennzeichnet, dass** die elektronische Steuereinhit (6) angeordnet ist, den Verschleiß von mehr als einem Drehmomentübertragungsbauteil zu erfassen.

**16.** Getriebe nach einem der Ansprüche 11-15 und mit einem Planetengetriebe (10, 11, 12), **dadurch gekennzeichnet, dass** das Sonnenrad (13, 16, 17) mindestens eines Planetenradsatzes des Planetengetriebes das vorausgewählte Drehmomentübertragungsbauteil ist.

**17.** Getriebe nach Anspruch 16, **dadurch gekennzeichnet, dass** das Sonnenrad (13) eines Planetenradsatzes (10), das Drehmoment mit dem höchsten Gangverhältnis überträgt, das vorausgewählte Drehmomentübertragungsbauteil ist.

## Revendications

**1.** Un procédé de détection de l'usure d'au moins un composant de transmission de couple présélectionné dans une boîte de vitesses de véhicule comportant un bloc de commande électronique dans lequel des signaux représentant au moins un rapport de vitesse sélectionné, un couple d'arbre d'entrée de boîte de vitesses et un régime de rotation d'arbre d'entrée sont disponibles dans le bloc de commande, **caractérisé par**

- l'accumulation d'un cycle d'utilisation mesuré, représentative des révolutions et du couple associé transmis par ledit composant lorsqu'il est en marche,
- le calcul de l'usure dudit composant en comparant le cycle d'utilisation mesuré accumulé avec un cycle d'utilisation total prédéterminé qui représente un niveau prédéterminé d'usure dudit composant.

**2.** Un procédé selon la revendication 1, **caractérisé en ce que** le cycle d'utilisation total prédéterminé est basé sur un diagramme Whöler obtenu à partir d'essais sur ledit composant de transmission de couple présélectionné.

**3.** Un procédé selon la revendication 1 ou 2, **caractérisé par** l'accumulation d'un cycle d'utilisation mesuré uniquement lorsque le composant de couple de transmission présélectionné est embrayé en couple de transmission.

**4.** Un procédé selon la revendication 1 ou 2, **caractérisé par** l'accumulation d'un cycle d'utilisation mesuré uniquement à des niveaux de couple au-dessus d'un niveau de couple prédéterminé.

**5.** Un procédé selon l'une des revendications 1-4, **caractérisé par** la production d'un signal de sortie représentant le cycle d'utilisation accumulé, divisé par ledit cycle d'utilisation total prédéterminé.

**6.** Un procédé selon la revendication 5, **caractérisé par** l'utilisation dudit signal de sortie comme un signal d'entrée dans le moyen indicateur lisible de l'intérieur d'un véhicule pour indiquer l'usure d'une boîte de vitesses montée dans le véhicule.

**7.** Un procédé selon la revendication 5, **caractérisé par** l'utilisation dudit signal de sortie comme un signal d'entrée dans le moyen indicateur lisible de l'extérieur d'un véhicule.

**8.** Un procédé selon l'une des revendications 1- 7 pour détecter l'usure d'au moins un composant de transmission de couple dans une boîte de vitesses de véhicule automatique ayant un engrenage planétaire, **caractérisé en ce que** le pignon soleil (13) d'un train planétaire est ledit composant de transmission de couple présélectionné.

**9.** Un procédé selon la revendication 8, **caractérisé en ce que** le pignon soleil d'un train planétaire transmettant un couple avec le rapport de vitesse le plus élevé est ledit composant de transmission de couple présélectionné.

**10.** Un procédé selon l'une des revendications 1- 9, **caractérisé en ce que** l'usure de plus d'un composant de transmission de couple, est détectée.

**11.** Une boîte de vitesses de véhicule moteur (3) comprenant un bloc de commande électronique (6), des signaux représentant au moins un rapport de vitesse sélectionné, un couple d'arbre d'entrée de boîte de vitesses et un régime de rotation d'arbre d'entrée étant disponibles dans le bloc de commande électronique, **caractérisée en ce que** le bloc de commande électronique (6) est adapté pour calculer l'usure d'un composant de transmission de couple présélectionné de la boîte de vitesses en accumulant un cycle d'utilisation mesuré (DC) représentatif des révolutions et du couple associé, transmis par ledit composant lorsqu'il est en marche, et en comparant le cycle d'utilisation mesuré accumulé avec un cycle d'utilisation total ($DC_{tot}$) qui représente un niveau prédéterminé d'usure dudit composant.

**12.** Une boîte de vitesses selon la revendication 11, **caractérisée en ce que** dans le bloc de commande électronique (6) se trouve mémorisé en forme de tableau, un diagramme Whöler obtenu à partir d'essais sur ledit composant de transmission de couple, ledit cycle d'utilisation total prédéterminé étant basé sur ledit diagramme.

**13.** Une boîte de vitesses selon la revendication 11 ou 12, **caractérisée en ce que** le bloc de commande électronique (6) est adapté pour accumuler un cycle d'utilisation mesuré (DC) uniquement lorsque le composant de transmission de couple présélectionné est embrayé en couple de transmission.

**14.** Une boîte de vitesses selon les revendications 11-12, **caractérisée en ce que** le bloc de commande électronique (6) est adapté pour accumuler un cycle d'utilisation mesuré (DC) uniquement à des niveaux de couple au-dessus d'un niveau de couple prédéterminé ($T_{low}$).

**15.** Une boîte de vitesses selon l'une des revendications 11-14, **caractérisée en ce que** le bloc de commande électronique (6) est adapté pour détecter l'usure de plus d'un composant de transmission de couple.

**16.** Une boîte de vitesses selon l'une des revendications 11-15 et ayant un engrenage planétaire (10, 11, 12), **caractérisée en ce que** le pignon soleil (13, 16, 17) d'au moins un train planétaire dudit engrenage planétaire est ledit composant de transmission de couple présélectionné.

**17.** Une boîte de vitesses selon la revendication 16, **caractérisée en ce que** le pignon soleil (13) d'un train planétaire (10) transmettant le couple avec le rapport de vitesse le plus élevé est ledit composant de transmission de couple présélectionné.

Fig. 3

Fig. 1

Fig. 2